# EUROPÄISCHE PATENTANMELDUNG

(11) **EP 1 329 831 A1**
(43) Veröffentlichungstag der Anmeldung: **23.07.2003**
(21) Anmeldenummer: 02029050.8
(22) Anmeldetag: 27.12.2002
(51) Int. Cl.: G06F 17/60

(54) **Verfahren zur Zuordnung sozialer Leistungen an einen Klienten**

(30) Priorität: 17.01.2002 DE 10201576
(71) Anmelder: C & S Computer und Software GmbH, 86153 Augsburg (DE)
(72) Erfinder: Ristok Bruno, Dr., 86153 Augsburg (DE); Körner, Elisabeth, 86157 Augsburg (DE)
(74) Vertreter: Rapp, Bertram, Dr.

(57) **Zusammenfassung**

Die Erfindung betrifft ein Rechriergestütztes Verfahren zur Zuordnung personenbezogener sozialer Leistungen eines Anbieters an einen Klienten (K), gekennzeichnet durch folgende Schritte:
a) Erfassen des Status des Klienten (K) anhand einer Vielzahl von Parametern (P1..Pn) durch Zuordnung eines klientenspezifischen Wertes (W(P1)...W(Pn)) für jeden Parameter (P1...Pn) und Abspeichern der so erzeugten Parameterliste (PL) in einem ersten Speicher (M1),
b) Analysieren der Parameterliste (PL) durch Vergleich mit einer in einem zweiten Speicher (M2) abgespeicherten, ersten Zuordnungstabelle (ZPP) von Parametern (P1...PN) zu Problemen (PB1...PBM) und Erzeugen einer Problemliste (PBL),
c) Analysieren der Problemliste (PBL) durch Vergleich mit einer in einem dritten Speicher (M3) abgespeicherten, zweiten Zuordnungstabelle (ZPZ) von Problemen (PB1...PBM) zu Zielen (Z1...ZQ) und Erzeugen einer Zielauswahlliste (ZAL), unter Berücksichtigung von gespeicherten Randbedingungen (RB),
d) Auswählen eines oder mehrerer optimaler Ziele (Z1...Zq) aus der Zielauswahlliste (ZAL) unter Anwendung von Optimierungsmethoden und Erstellen einer Zielliste (ZL),
e) Zuordnen von Maßnahmen (MN1...MNR) zu dem oder jedem ausgewählten Ziel (Z1...Zq) durch Vergleich mit einer in einem vierten Speicher (M4) abgespeicherten, dritten Zuordnungstabelle (ZZM) von Zielen (Z1...ZQ) zu Maßnahmen (MN1...MNR) und Erzeugen einer Maßnahmenliste (ML), unter Berücksichtigung von gespeicherten Randbedingungen (RB).

## Beschreibung

Die Erfindung betrifft ein rechnergestütztes Verfahren zur Zuordnung personenbezogener sozialer Leistungen eines Anbieters an einen Klienten nach dem Oberbegriff des Anspruchs 1.

Derartige personenbezogene soziale Leistungen werden beispielsweise in Krankenhäusern, Pflegeheimen und Altenheimen erbracht, jedoch auch im Bereich der Kinder- und Jugendsozialhilfe, beispielsweise in Kinderheimen, Jugendheimen und Heimen für schwer erziehbare Jugendliche sowie in Behindertenheimen und in Lerninstituten für Behinderte. Diese Aufzählung ist nicht abschließend. Im Sinne der vorliegenden Anmeldung sollen personenbezogene soziale Leistungen alle Arten von Leistungen sein, bei denen eine soziale Einrichtung oder ein Unternehmen gegenüber einer Person soziale Leistungen erbringt.

Beispielsweise in Einrichtung der Altenhilfe und Altenpflege ist es üblich und notwendig, neue in die Einrichtung aufzunehmende Personen - im folgenden als "Klienten" bezeichnet - zunächst zu untersuchen und einem sog. Assessment zu unterwerfen. Hierbei wird festgestellt, welche Fähigkeiten und Fertigkeiten der Klient besitzt, also der Status des Klienten erfaßt. Aus diesem Status ergeben sich dann die zu leistenden Pflege- und Hilfsmaßnahmen. Insbesondere im Bereich der Altenhilfe werden im Rahmen des Assessments folgende Parameter erfaßt: Das Kurzzeitgedächtnis, das Langzeitgedächtnis, die Entscheidungsfähigkeit, die Hörfähigkeit, die Verständlichkeit, die Veränderung der Kommunikationsfähigkeit mit der Zeit und bei Belastung, die Sehfähigkeit, Depressionen, Ängstlichkeit, Weinerlichkeit, wiederholte Bewegungen (Tick), die Aktivitäten, die Stimmungslage, die Veränderung der Stimmungslage unter bestimmten Randbedingungen, das Umherlaufen, Verhaltensauffälligkeiten, die Veränderung von Verhaltensauffälligkeiten, die Fähigkeit, Ziele zu setzen, die Art und Weise der Beziehungen, die eingenommenen Rollen, die Beweglichkeit im Bett, das Baden und Duschen, das Gleichgewicht im Sitzen, die Einschätzung des Pflegepersonals, die Urin- und Stuhlinkontinenz, Verstopfung, Einklemmung, vorhandene Katheter und Einlagen, Hypo- oder Hypertonie, periphere arterielle Erkrankungen, Depressionen, Augenerkrankungen, Infektionen, Dehydrierung, Gewichtsschwankungen, die Flüssigkeitszufuhr, Benommenheit, Fieber, Halluzinationen, Blutungen, Lungenverlegung, Bewußtlosigkeit, Sturz, Frakturen, Schluckschwierigkeiten, Schmerzen im Mund, Gewichtsverlust, Geschmacksveränderung, Eßfähigkeit, die Notwendigkeit parenteraler Ernährung, Sonden, Zahnstand, Zahnreinigung, Druckgeschwüre, Tastsinn, Beteiligung an Aktivitäten, Einnahme von Medikamenten, notwendige Fixierungen des Rumpfes und der Extremitäten etc..

Aufgrund der so gewonnen Daten ermittelt das Personal die notwendigen Maßnahmen, um den Klienten möglichst gut zu pflegen. Die Ermittlung dieser Maßnahmen erfolgt häufig intuitiv und ohne genaue Definition der Ziele, welche mit diesen Maßnahmen erreicht werden sollen. Selbst wenn diese Ziele jedoch festgelegt und die Maßnahmen darauf abgestimmt werden, geschieht dies in der Regel nur unter äußerst unzureichender Berücksichtigung der Randbedingungen, insbesondere der für die Behandlung zur Verfügung stehenden Mittel (Kosten) und der im Krankenhaus der Pflegeanstalt zur Verfügung stehenden Ressourcen (Heilmittel, Spezialbetten, Matratzen, Beatmungsgeräte etc.), da insbesondere in einer größeren Anstalt das Pflegepersonal gar nicht sämtliche momentan zur Verfügung stehenden Ressourcen kennt und zielgerichtet einsetzen kann.

Es besteht daher die Aufgabe, ein Verfahren zur Zuordnung personenbezogener sozialer Leistungen eines Anbieters an einen Klienten so auszugestalten, daß unter Berücksichtigung der Kosten und Ressourcen eine möglichst optimale Zuwendung der Leistungen an den Klienten sichergestellt wird.

Gelöst wird diese Aufgabe mit den kennzeichnenden Merkmalen des Anspruchs 1. Vorteilhafte Ausgestaltungen sind den Unteransprüchen entnehmbar.

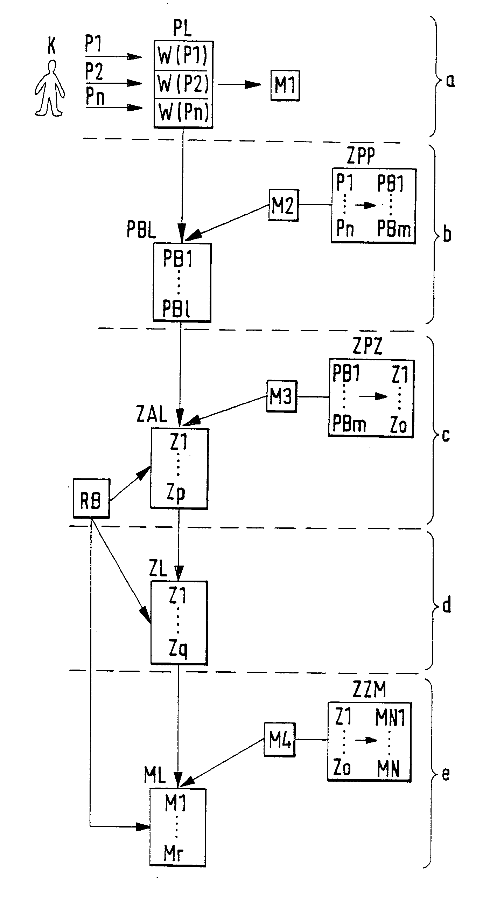

Ein Ausführungsbeispiel der Erfindung wird im folgenden unter Bezugnahme auf die Zeichnung näher erläutert, welche einen schematischen Ablaufplan eines erfindungsgemäßen Verfahrens zeigt.

Ebenso wie in der Beschreibungseinleitung bezieht sich das dargestellte, bevorzugte Ausführungsbeispiel auf ein Altenpflegeheim. In gleicher Weise kann das erfindungsgemäße Verfahren jedoch bei jeder anderen Zuordnung personenbezogener sozialer Leistungen an einen Klienten verwendet werden, beispielsweise bei den in der Beschreibungseinleitung genannten Pflege-, Kranken-, Jugend- und Hilfsdiensten sowie im Bereich der Behindertenhilfe und des Behindertenlernens sowie bei sämtlichen Dienstleistungen, bei denen Menschen Hilfen durch professionelle bzw. ehrenamtliche Helfer gewährt werden.

Das erfindungsgemäße Verfahren arbeitet rechnergestützt unter Verwendung einer Datenverarbeitungsanlage.

In einem ersten Verfahrensschritt wird der Status des Klienten K erfaßt. Dies erfolgt durch Abfrage einer Vielzahl von Parametern P1...Pn, beispielsweise durch Abfrage des Patienten nach den in der Beschreibungseinleitung genannten Daten bzw. Beobachtung des Patienten oder Befragung des bisher behandelnden Arztes, der Angehörigen oder eines früheren Altenpflegeheims. Dieser Vorgang entspricht im wesentlichen dem aus den klassischen Zuordnungsverfahren bekannten "Assessment". Im Unterschied zu den bekannten Verfahren können jedoch die Daten, die von anderen Stellen, beispielsweise Ärzten oder andere Altenpflegeheimen, bereits erfaßt worden sind, unmittelbar per Datentransfer in das System eingelesen werden, so daß diese nur noch zu aktualisieren bzw. zu ergänzen sind. Beispiele für erfaßte Parameter sind in der Beschreibungseinleitung aufgelistet (beispielsweise Seh- und Hörvermögen, Gehfähigkeit, Reflexe, etc.). In ebenfalls an sich bekannter Weise wird jedem erfaßten Parameter ein klientenspezifischer Wert W (P1) ...W (Pn) zugeordnet. Kann beispielsweise der Klient sich nur undeutlich ausdrücken, so erhält er einen Wert von 4 für den Parameter für den Parameter "Sprechfähigkeit", wenn ein optimales Sprechen den Wert 1 und ein unverständliches Sprechen den Wert 5 erhielte. Durch die Zuweisung eines klientenspezifischen Wertes für jeden Parameter erhält man ein klientenspezifisches Profil als Grundlage für alle weiteren Verfahrensschritte. Dieses klientenspezifische Profil wird in einer Parameterliste PL erfaßt und in einem ersten Speicher M1 abgespeichert.

In einem zweiten Verfahrensschritt wird die im ersten Schritt erhaltene Parameterliste PL mit einer in einem zweiten Speicher M2 abgespeicherten, ersten Zuordnungstabelle ZPP verglichen. Diese erste Zuordnungstabelle ZPP ist eine Zuordnungstabelle von Parametern (P1...Pn) zu Problemen (PB1...PBM), d. h. es wird aus dem ermittelten Parameterprofil ein Problemprofil erzeugt. Hierbei ist es nicht notwendig und in der Regel auch nicht der Fall, daß zu jedem Parameter ein Problem gehört. Vielmehr ergibt sich ein Problem aus der gemeinsamen Analyse einer Vielzahl von Parametern und in der Regel werden sich aus einer Vielzahl von Parametern eine Reihe von Problemen ergeben, wobei die Anzahl der Probleme in der Regel geringer ist als die Anzahl der Parameter. Ein allgemeiner Zusammenhang zwischen Anzahl der Parameter und Anzahl der Problemen besteht jedoch nicht. Aus diesem Vergleich der Parameterliste PL mit der Zuordnungstabelle ZPP entsteht eine klientenspezifische Problemliste PBL, welche diejenigen Probleme enthält, die der Klient aufgrund der Analyse hat. Dies kann beispielsweise schlechte Sehfähigkeit, Inkontinenz, Schlaflosigkeit, Verwirrtheit etc. sein. Die Problemliste wird vorzugsweise so erstellt, daß das schwerwiegendste und am nötigsten zu behandelnde Problem ganz oben steht und das am wenigsten wichtige Problem ganz unten.

In einem dritten, sich anschließenden Verfahrensschritt wird die im zweiten Schritt erstellte Problemliste PBL mit einer in einem dritten Speicher M3 abgespeicherten, zweiten Zuordnungstabelle ZPZ verglichen. Diese zweite Zuordnungstabelle ZPZ stellt den Problemen PB1...PBM Ziele Z1...ZQ gegenüber. Hier ist also bereits von vornherein festgelegt, aufgrund welcher Probleme welche Ziele zu erreichen sind. Dies kann beispielsweise die Verbesserung der Sehfähigkeit oder des Durchschlafens sein. Aus dem Vergleich der Problemliste PBL mit der zweiten Zuordnungstabelle ZPZ ergibt sich eine Zielauswahlliste ZAL, in welcher als dritter Parameter jedoch noch Randbedingungen RB, die in einem weiteren Speicher abgelegt sind, eingehen. Diese Randbedingungen können die Behandlungskosten und die Ressourcen des Anbieters sein. Beispielsweise können bestimmte Ziele, die nur mit unverhältnismäßig hohen Kosten, die der Leistungsträger nicht zu zahlen bereit ist erreicht werden, von vornherein nicht in die Zielauswahlliste aufgenommen werden. Darüber hinaus können Ziele, die nur mit bestimmten Maßnahmen und Ressourcen erreicht werden können, über die die Anstalt nicht verfügt, auch nicht in die Zielauswahlliste aufgenommen werden, so daß die Zielauswahlliste ZAL kein ideales, sondern ein reelles Bild möglicher Ziele bietet.

In einem weiteren, sich anschließenden Verfahrensschritt werden aus der Zielauswahlliste eines oder mehrere optimale Ziele unter Anwendung von Optimierungsmethoden ausgewählt und es wird eine Zielliste ZL erstellt. Im Rahmen dieser an sich bekannten Optimierungsmethoden wird geprüft, welche Ziele besonders lohnenswert und gleichzeitig besonders preisgünstig bzw. mit besonders wenig Einsatz in materieller, personeller und finanzieller Hinsicht zu erreichen sind. In diesem Optimierungsverfahren wird die Zielauswahlliste im wesentlichen neu geordnet und es werden Ziele mit hohem wirtschaftlichem Einsatz, aber geringen Wert für den Patienten ausgesondert. Auch in diesem Verfahrensschritt können die Randbedingungen RB einfließen.

In einem sich anschließenden, letzten Verfahrensschritt werden nun zu dem oder jedem ausgewählten, in der Zielliste ZL enthaltenen Ziel Maßnahmen ausgewählt und diesem Ziel zugeordnet. Dies erfolgt durch Vergleich mit einer in einem vierten Speicher M4 abgespeicherten, dritten Zuordnungstabelle ZZM von Zielen Z1...ZQ zu Maßnahmen MN1...MNR und Erzeugen einer Maßnahmeliste ML. Diese Maßnahmen können beispielsweise eine Sehhilfe, eine Dekubitusmatratze, besondere Pflegemaßnahmen, krankengymnastische Maßnahmen etc. sein. Auch in diesen Verfahrensschritt gehen jedoch die Randbedingungen, wie oben beschrieben, ein. Es werden also nur solche Maßnahmen in die Maßnahmenliste ML aufgenommen, wie sie durch die Randbedingungen RB zugelassen werden. Würde sich also ohne Berücksichtigung der Randbedingungen RB eine teure Dekubitusmatratze als Maßnahme anbieten, stünde diese jedoch nicht zur Verfügung, würde diese Maßnahme aufgrund dieser Randbedingung "nicht zur Verfügung stehende Dekubitusmatratze" aus der Maßnahmenliste ML gestrichen.

Die so erhaltene Maßnahmenliste ML wird dem Pflegepersonal bzw. der Pflegeleitung übergeben und die Maßnahmen werden in an sich bekannter Weise abgearbeitet und durchgeführt.

In besonders bevorzugten Ausführungsformen der Erfindung enthalten die Randbedingungen RB darüber hinaus klientenspezifische Werte der Parameter P1...Pn des Klienten K. Falls z. B. bekannt ist, daß ein Klient K auf bestimmte Behandlungen oder Medikament nicht anspricht, würde dies in die Randbedingungen RB eingehen und die Auswahl der Zielauswahlliste ZAL und der Maßnahmenliste ML entsprechend beeinflussen, da diese nicht ansprechenden Medikamenten und Behandlungsmaßnahmen aus den zur Verfügung stehenden Maßnahmen MN1...MNR gestrichen würden.

Darüber hinaus können die Randbedingungen RB die freien und/oder gebundenen Ressourcen des Anbieters enthalten. Dies können, wie oben beschrieben, eine Dekubitusmatratze, ein bestimmtes Pflegebett, eine bestimmte Pflegekraft, weiteres spezifisches Personal etc. sein. Besonders vorteilhaft ist es, daß diese Liste von Randbedingungen dynamisch sein kann und die Veränderungen in den Ressourcen berücksichtigen kann. Sobald beispielsweise eine bestimmte Ressource frei wird ändern sich die Randbedinungen entsprechend, so daß diese Ressource auch baldmöglichst wieder nutzbringend verwendet wird. Ferner kann jede gebundene Ressource mit einem Bindungsparameter abgespeichert werden, der die Wichtigkeit der vorhandenen Bindung und damit die Verfügbarkeit dieser Ressource ergibt. Benötigt beispielsweise ein Klient eine bestimmte Ressource sehr dringend, ist diese Ressource aber von einem anderen Klienten belegt, kann der Rechner bei Abprüfen der Randbedinungen RB den Bindungsparameter prüfen und feststellen, daß die belegte Ressource nur mit einem geringen Bindungsparameter versehen ist. Dies würde bedeuten, daß der Klient, welcher die Ressource bindet, diese nicht unbedingt benötigt oder jedenfalls benötigt als der neu erfaßte Klient. In diesem Falle würde die Ressource dem neuen Klienten zugeordnet werden.

Selbstverständlich können die Randbedinungen RB auch den Leistungskatalog eines Kostenträgers, beispielsweise einer Krankenkasse enthalten, ebenso die Kosten für die Erreichung der Ziele Z1...ZQ und Maßnahmen MN1...MNR.

Verglichen mit den bekannten Verfahren bietet das erfindungsgemäße Verfahren den besonderen Vorteil, daß es nicht nur schneller und einfacher abläuft, sondern auch eine zuverlässige Zuordnung von Ressourcen an Klienten möglich ist, und zwar in einer für alle Klienten optimalen Weise.

## Patentansprüche

1. Rechnergestütztes Verfahren zur Zuordnung personenbezogener sozialer Leistungen eines Anbieters an einen Klienten (K), **gekennzeichnet durch** folgende Schritte:
a) Erfassen des Status des Klienten (K) anhand einer Vielzahl von Parametern (P1..Pn) **durch** Zuordnung eines klientenspezifischen Wertes (W(P1)...W(Pn)) für jeden Parameter (P1...Pn) und Abspeichern der so erzeugten Parameterliste (PL) in einem ersten Speicher (M1),
b) Analysieren der Parameterliste (PL) **durch** Vergleich mit einer in einem zweiten Speicher (M2) abgespeicherten, ersten Zuordnungstabelle (ZPP) von Parametern (P1...PN) zu Problemen (PB1...PBM) und Erzeugen einer Problemliste (PBL),
c) Analysieren der Problemliste (PBL) **durch** Vergleich mit einer in einem dritten Speicher (M3) abgespeicherten, zweiten Zuordnungstabelle (ZPZ) von Problemen (PB1...PBM) zu Zielen (Z1...ZQ) und Erzeugen einer Zielauswahlliste (ZAL), unter Berücksichtigung von gespeicherten Randbedingungen (RB),
d) Auswählen eines oder mehrerer optimaler Ziele (Z1...Zq) aus der Zielauswahlliste (ZAL) unter Anwendung von Optimierungsmethoden und Erstellen einer Zielliste (ZL),
e) Zuordnen von Maßnahmen (MN1...MNR) zu dem oder jedem ausgewählten Ziel (Z1...Zq) **durch** Vergleich mit einer in einem vierten Speicher (M4) abgespeicherten, dritten Zuordnungstabelle (ZZM) von Zielen (Z1...ZQ) zu Maßnahmen (MN1...MNR) und Erzeugen einer Maßnahmenliste (ML), unter Berücksichtigung von gespeicherten Randbedingungen (RB).

2. Verfahren nach Anspruch 1, **dadurch gekennzeichnet, daß** die Randbedingungen (RB) die klientenspezifischen Werte der Parameter (P1...Pn) des Klienten (K) enthalten.

3. Verfahren nach einem der voranstehenden Ansprüche, **dadurch gekennzeichnet, daß** die Randbedingungen (RB) die freien und/oder gebundenen Ressourcen des Anbieters enthalten.

4. Verfahren nach Anspruch 3, **dadurch gekennzeichnet, daß** jede gebundene Ressource mit einem Bindungsparameter abgespeichert sind, der die Wichtigkeit der vorhandenen Bindung und damit die Verfügbarkeit dieser Ressource angibt.

5. Verfahren nach einem der voranstehenden Ansprüche, **dadurch gekennzeichnet, daß** die Randbedingungen (RB) den Leistungskatalog eines Kostenträgers enthalten.

6. Verfahren nach einem der voranstehenden Ansprüche, **dadurch gekennzeichnet, daß** die Randbedingungen (RB) die Kosten für die Erreichung der Ziele (Z1...ZQ) und/oder für die Maßnahmen (MN1...MNR) und/oder den Geldbetrag, den der Klient (K) investieren will und/oder bestimmte Empfehlungen zur Bewertung von Verhaltensauffälligkeiten enthalten.

7. Verfahren nach einem der voran stehenden Ansprüche, **dadurch gekennzeichnet, daß** auch im Verfahrensschritt (d) des Auswählens eines oder mehrerer optimaler Ziele gespeicherte Randbedingungen (RB) berücksichtigt werden.
